(19)

Europäisches Patentamt
European Patent Office
Office européen des brevets

(11) **EP 4 202 771 A1**

(12) **EUROPEAN PATENT APPLICATION**

(43) Date of publication:
**28.06.2023 Bulletin 2023/26**

(21) Application number: **22215083.1**

(22) Date of filing: **20.12.2022**

(51) International Patent Classification (IPC):
**G06N 3/045** (2023.01)   **G06N 3/09** (2023.01)
**G06N 3/082** (2023.01)   **G06Q 40/00** (2023.01)
**G06F 21/30** (2013.01)

(52) Cooperative Patent Classification (CPC):
**G06N 3/045; G06N 3/09;** G06F 21/30; G06N 3/082;
G06Q 40/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021   US 202117645744**

(71) Applicant: **Equifax, Inc.
Atlanta, GA 30309 (US)**

(72) Inventors:
• **McBurnett, Michael Dale
  Georgia, 30309 (US)**
• **Woodford, Terry
  Georgia, 30309 (US)**

(74) Representative: **ATIP
Armstrong Teasdale Limited
38-43 Lincoln's Inn Fields
London WC2A 3PE (GB)**

(54) **UNIFIED EXPLAINABLE MACHINE LEARNING FOR SEGMENTED RISK ASSESSMENT**

(57)    Various aspects involve unified explainable machine learning for segmented risk assessment. For example, a computing device can determine, using a unified model built from segment models, a risk indicator for a target entity from predictor variables associated with the target entity. The target entity belongs to one of a plurality of entity segments each associated with a segment model of the segment models. The unified model is generated by: accessing training samples for the entity segments; training the segment models using respective training samples for the entity segments; constructing the unified risk prediction model by stacking the trained segment models; and training the unified risk prediction model using the training samples for the entity segments. The computing device can transmit, to a remote computing device, a responsive message including at least the risk indicator for use in controlling access of the target entity to an interactive computing environment.

FIG. 1

EP 4 202 771 A1

## Description

## Technical Field

The present disclosure relates generally to machine learning and artificial intelligence. More specifically, but not by way of limitation, this disclosure relates to unified machine learning for segment-based risk assessment and outcome prediction.

## Background

In machine learning, various models (e.g., artificial neural networks) have been used to perform functions such as providing a prediction of an outcome based on input values. In some cases, entities for which the prediction is made are divided into different segments, such as a segment for entities having high risks, a segment for entities having medium risks, and a segment for entities having low risks. Different models can be built for these different segments so that each model is designed to make predictions for a more homogeneous group of entities. However, these different models oftentimes generate predictions at different scales rendering the interpretation of the predictions inconsistent across different segments. To address this issue, post-hoc alignment can be introduced to align the prediction outputs from different models. However, such post-hoc processing not only delays the prediction, but it also introduces distortions to the prediction results, leading to less accurate prediction outcomes.

## Summary

Various aspects of the present disclosure provide systems and methods for generating a unified machine learning model for segment-based risk assessment and outcome prediction. In one example, a method includes determining, using a unified risk prediction model built from a plurality of segment models, a risk indicator for a target entity from predictor variables associated with the target entity. The target entity belongs to one of a plurality of entity segments each associated with a segment model of the plurality of segment models. The unified risk prediction model is configured to be generated by performing operations comprising: accessing training samples for the plurality of entity segments, each training sample comprising values for training predictor variables and a corresponding training output; training the plurality of segment models using respective training samples for the plurality of entity segments; constructing the unified risk prediction model by stacking the trained plurality of segment models; and training the unified risk prediction model using the training samples for the plurality of entity segments. The method further includes transmitting, to a remote computing device, a responsive message including at least the risk indicator for use in controlling access of the target entity to one or more interactive computing environments.

In another example, a system includes a processing device and a memory device in which instructions executable by the processing device are stored for causing the processing device to determine, using a unified risk prediction model built from a plurality of segment models, a risk indicator for a target entity from predictor variables associated with the target entity. The target entity belongs to one of a plurality of entity segments each associated with a segment model of the plurality of segment models. The unified risk prediction model is configured to be generated by performing operations comprising: accessing training samples for the plurality of entity segments, each training sample comprising values for training predictor variables and a corresponding training output; training the plurality of segment models using respective training samples for the plurality of entity segments; constructing the unified risk prediction model by stacking the trained plurality of segment models; and training the unified risk prediction model using the training samples for the plurality of entity segments. The instructions further cause the processing device to transmit, to a remote computing device, a responsive message including at least the risk indicator for use in controlling access of the target entity to one or more interactive computing environments.

In yet another example, a non-transitory computer-readable storage medium having program code that is executable by a processor device to cause a computing device to perform operations. The operations include determining, using a unified risk prediction model built from a plurality of segment models, a risk indicator for a target entity from predictor variables associated with the target entity. The target entity belongs to one of a plurality of entity segments each associated with a segment model of the plurality of segment models. The unified risk prediction model is configured to be generated by performing actions comprising: accessing training samples for the plurality of entity segments, each training sample comprising values for training predictor variables and a corresponding training output; training the plurality of segment models using respective training samples for the plurality of entity segments; constructing the unified risk prediction model by stacking the trained plurality of segment models; and training the unified risk prediction model using the training samples for the plurality of entity segments. The operations further include transmitting, to a remote computing device, a responsive message including at least the risk indicator for use in controlling access of the target entity to one or more interactive computing environments.

This summary is not intended to identify key or essential features of the claimed subject matter, nor is it intended to be used in isolation to determine the scope of the claimed subject matter. The subject matter should be understood by reference to appropriate portions of the entire specification, any or all drawings, and each claim.

The foregoing, together with other features and examples, will become more apparent upon referring to the following specification, claims, and accompanying drawings.

## Brief Description of the Drawings

FIG. 1 is a block diagram depicting an example of a computing environment in which a unified machine learning model for segment-based risk assessment and outcome prediction can be built and applied in a risk assessment application, according to certain aspects of the present disclosure.

FIG. 2 is a flow chart depicting an example of a process for generating and utilizing a unified machine learning model for segment-based risk assessment to generate risk indicators for a target entity based on predictor variables associated with the target entity, according to certain aspects of the present disclosure.

FIG. 3 is a flow chart depicting an example of a process for training a unified machine learning model for segment-based risk assessment and outcome prediction, according to certain aspects of the present disclosure.

FIGS. 4A-4C are diagrams depicting examples of a first segment model, a second segment model, and a unified neural network model that can be generated and optimized according to certain aspects of the present disclosure.

FIG. 5 is a diagram depicting another example of the architecture of a unified neural network model that can be generated and optimized according to certain aspects of the present disclosure.

FIG. 6 is a block diagram depicting an example of a computing system suitable for implementing certain aspects of the present disclosure.

## Detailed Description

Certain aspects described herein are provided for generating and using a unified machine learning model for segment-based risk assessment and outcome prediction. A risk assessment computing system, in response to receiving a risk assessment query for a target entity, can access a unified machine learning model trained to generate a risk indicator for the target entity based on predictor variables associated with the target entity. The unified machine learning model (also referred to as the "unified model") can be generated by aggregating multiple sub-models configured to perform predictions for respective segments (also referred to as "segment models"). The risk assessment computing system can apply the unified machine learning model on the predictor variables to compute the risk indicator for the target entity without additional output alignment. The risk assessment computing system can transmit a response to the risk assessment query for use by a remote computing system in controlling access of the target entity to one or more interactive computing environments.

For example, the unified machine learning model can be a neural network generated by aggregating multiple segment models which can also be neural networks. Each of the segment models can include an input layer, one or more hidden layers, and an output layer. Each layer contains one or more nodes connected to the nodes in another layer. Each of the input nodes in the input layer is configured to accept a predictor variable as an input and feed it to the first hidden layer. The node in the output layer is configured to receive processed data from the last hidden layer and output the prediction for the segment associated with the segment model. To generate the unified machine learning model, these multiple segment models can be stacked together. For example, the input layer of the unified machine learning model can include nodes merged from the nodes in the input layers of these segment models. The hidden layers of the unified risk model can be constructed by including nodes in the corresponding hidden layers of the segment models. The output layer can be constructed by merging nodes in the output layers of the segment models.

The training of the unified machine learning model can involve a two-stage training. In the first stage, individual segment models are trained separately using the respective training samples. Each training sample in a segment can include values for training predictor variables and a corresponding training output. Each segment model can be trained using the training samples to obtain weights for the connections among the nodes in different layers. In the second stage, the unified machine learning model can be built and trained to further adjust the weights of the connections among the nodes. The unified risk prediction model can be initialized for training by setting weights of connections among the input layer, the hidden layers, and the output layer of the unified model to be the weights of corresponding connections in the respective segment models. In some examples, the connection between nodes of two layers can be removed if, during the first stage training, the weight for the connection is determined to be zero or below a threshold value. The training of the unified model can be performed using the collection of the training samples of the multiple segment models.

In some aspects, the unified machine learning model can be used to predict risk indicators for entities in different segments. For example, a risk assessment query for a target entity can be received from a remote computing device. Depending on the segment of the target entity, predictor variables associated with the target entity can be generated. An output risk indicator for the target entity can be computed by applying the unified machine learning model to the predictor variables. In some examples, individual segment models and the unified model can be trained to have monotonicity between each input predictor variable and the output risk indicator. In those examples, explanatory data indicating relationships between the risk indicator and the predictor variables can also be calculated. A responsive message including at least the output risk indicator can be transmitted to the remote computing device.

Certain aspects described herein, which can include operations and data structures with respect to the unified machine learning model, can provide more accurate and faster predictions for entities in different segments, thereby overcoming the issues identified above. For instance, the unified model presented herein is structured so that values generated by different segment models are aligned through the hidden layers and output layer of the unified model thereby eliminating the need of a post-hoc alignment among the outputs of the segment models. The elimination of the post-hoc alignment process significantly speeds up the prediction process and can also reduce the computations involved in generating the prediction for a target entity. Further, without the post-hoc alignment, the predictions generated by the machine learning model do not need to go through additional processing which can be highly non-linear, thereby increasing the accuracy of the final prediction.

Additional or alternative aspects can implement or apply rules of a particular type that improve existing technological processes involving machine-learning techniques. For example, the particular set of rules for merging the input layer nodes and output layer nodes of the segment models while keeping hidden layer nodes separate when building the unified model allows the unified model to keep the predictability of individual segment models. In addition, for the segment models and the unified model that have monotonicity, a particular set of rules can be employed in the training of the models to enforce the interpretability of the models. This set of rules allow monotonicity to be introduced to the unified model by adjusting the model based on exploratory data analysis or as a constraint in the optimization problem involved in the training of the model. Some of these rules allow the training of the monotonic neural network to be performed more efficiently without any post-training adjustment.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative examples but, like the illustrative examples, should not be used to limit the present disclosure.

*Operating Environment Example for Machine-Learning Operations*

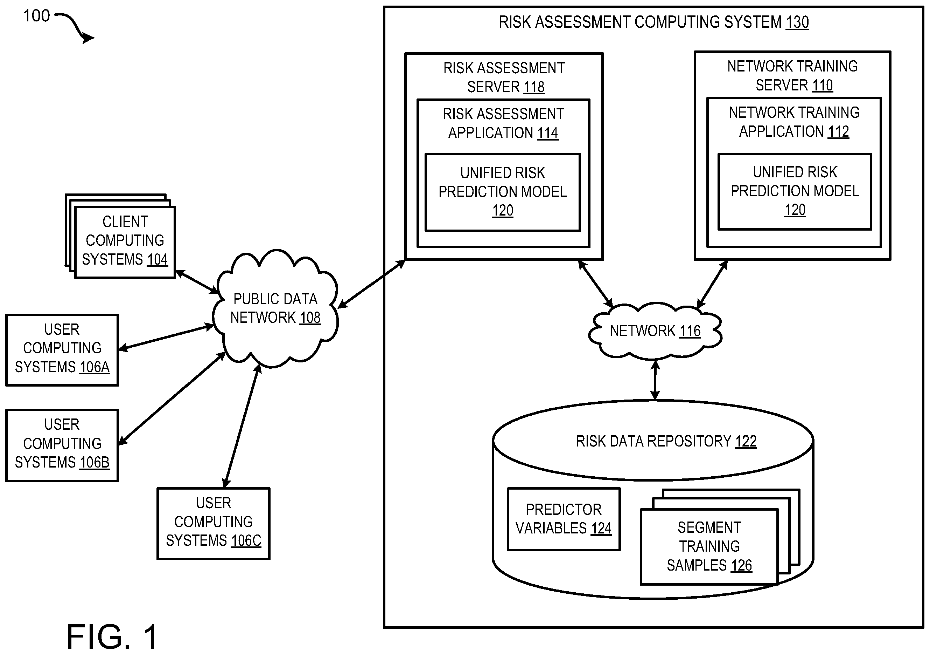

Referring now to the drawings, FIG. 1 is a block diagram depicting an example of an operating environment 100 in which a risk assessment computing system 130 builds and trains a unified risk prediction model that can be utilized to predict risk indicators based on predictor variables. FIG. 1 depicts examples of hardware components of a risk assessment computing system 130, according to some aspects. The risk assessment computing system 130 can be a specialized computing system that may be used for processing large amounts of data using a large number of computer processing cycles. The risk assessment computing system 130 can include a network training server 110 for building and training a unified risk prediction model 120 wherein the unified risk prediction model 120 can be built from multiple segment models. Each of the segment models can include an input layer, one or more hidden layers, and an output layer. Each layer contains one or more nodes connected to the nodes in another layer. The risk assessment computing system 130 can further include a risk assessment server 118 for performing a risk assessment for given predictor variables 124 using the trained unified risk prediction model 120.

The network training server 110 can include one or more processing devices that execute program code, such as a network training application 112. The program code can be stored on a non-transitory computer-readable medium. The network training application 112 can execute one or more processes to train and optimize a neural network for predicting risk indicators based on predictor variables 124.

In some aspects, the network training application 112 can build and train a unified risk prediction model 120 utilizing segment training samples 126. Each segment model can be trained with segment training samples 126. Different segment training samples are used to train different segment models. The segment training samples 126 can include multiple training vectors consisting of training data for predictor variables and training risk indicator outputs corresponding to the training vectors. The segment training samples 126 can be stored in one or more network-attached storage units on which various repositories, databases, or other structures are stored. Examples of these data structures are the risk data repository 122.

Network-attached storage units may store a variety of different types of data organized in a variety of different ways and from a variety of different sources. For example, the network-attached storage unit may include storage other than primary storage located within the network training server 110 that is directly accessible by processors located therein. In some aspects, the network-attached storage unit may include secondary, tertiary, or auxiliary storage, such as large hard drives, servers, virtual memory, among other types. Storage devices may include portable or non-portable storage devices, optical storage devices, and various other mediums capable of storing and containing data. A machine-readable storage medium or computer-readable storage medium may include a non-transitory medium in which data can be stored and that does not include carrier waves or transitory electronic signals. Examples of a non-transitory medium may include, for example, a magnetic disk or tape, optical storage media such as a compact disk or digital versatile disk, flash memory, memory, or memory devices.

The risk assessment server 118 can include one or more processing devices that execute program code, such as a risk assessment application 114. The program code can be stored on a non-transitory computer-readable medium. The risk assessment application 114 can execute one or more processes to utilize the unified risk prediction model 120 trained by the network training application 112 to predict risk indicators based on input predictor variables 124. In addition, the unified risk prediction model 120 can also be utilized to generate explanatory data for the predictor variables 124, which can indicate relationships between changes in the risk indicator and changes in the predictor variables.

The output of the trained unified risk prediction model 120 can be utilized to modify a data structure in the memory or a data storage device. For example, the predicted risk indicator and/or the explanatory data can be utilized to reorganize, flag, or otherwise change the predictor variables 124 involved in the prediction by the unified risk prediction model 120. For instance, predictor variables 124 stored in the risk data repository 122 can be attached with flags indicating their respective amount of impact on the risk indicator. Different flags can be utilized for different predictor variables 124 to indicate different levels of impact. Additionally, or alternatively, the locations of the predictor variables 124 in the storage, such as the risk data repository 122, can be changed so that the predictor variables 124 or groups of predictor variables 124 are ordered, ascendingly or descendingly, according to their respective amounts of impact on the risk indicator.

By modifying the predictor variables 124 in this way, a more coherent data structure can be established which enables the data to be searched more easily. In addition, further analysis of the unified risk prediction model 120 and the outputs of the unified risk prediction model 120 can be performed more efficiently. For instance, predictor variables 124 having the most impact on the risk indicator can be retrieved and identified more quickly based on the flags and/or their locations in the risk data repository 122. Further, updating the unified risk prediction model 120, such as re-training the unified risk prediction model 120 based on new values of the predictor variables 124, can be performed more efficiently especially when computing resources are limited. For example, updating or retraining the unified risk prediction model 120 can be performed by incorporating new values of the predictor variables 124 having the most impact on the output risk indicator based on the attached flags without utilizing new values of all the predictor variables 124.

Furthermore, the risk assessment computing system 130 can communicate with various other computing systems, such as client computing systems 104. For example, client computing systems 104 may send risk assessment queries to the risk assessment server 118 for risk assessment, or may send signals to the risk assessment server 118 that control or otherwise influence different aspects of the risk assessment computing system 130. The client computing systems 104 may also interact with user computing systems 106A-C via one or more public data networks 108 to facilitate interactions between users of the user computing systems 106A-C and interactive computing environments provided by the client computing systems 104. The user computing systems 106A-C may be associated with entities classified into different segments, where each segment is associated with a disjoint group of entities. For example, the user computing system 106A may be associated with an entity having fewer than three accounts, the user computing system 106B can be associated with an entity having three accounts, and the user computing system 106C can be associated with an entity having more than three accounts. As another example, one segment can be associated with entities having at least one thirty or more days of delinquency on their credit report in the last twelve months, while another segment can be associated with high credit utilization and no delinquencies on file. User computing devices or their associated entities may be classified into different segments according to other characteristics of the devices or entities. For example, the user computing devices may be classified into segments according to the type of the devices, such as laptop, tablet, and smartphone, according to the network through which the device is accessing the interactive computing environments, such as public network, private network, and others. The predictor variables 124 for the segments can initially be the same superset of predictor variables, and through training, reduce to different sets of predictor variables for different segment models. Some of the input predictor variables can have overlap among the segment models.

Each client computing system 104 may include one or more third-party devices, such as individual servers or groups of servers operating in a distributed manner. A client computing system 104 can include any computing device or group of computing devices operated by a seller, lender, or other providers of products or services. The client computing system 104 can include one or more server devices. The one or more server devices can include or can otherwise access one or more non-transitory computer-readable media. The client computing system 104 can also execute instructions that provide an interactive computing environment accessible to user computing systems 106A-C. Examples of the interactive computing environment include a mobile application specific to a particular client computing system 104, a web-based application accessible via a mobile device, etc. The executable instructions are stored in one or more non-transitory computer-readable media.

The client computing system 104 can further include one or more processing devices that are capable of providing the interactive computing environment to perform operations described herein. The interactive computing environment can include executable instructions stored in one or more non-transitory computer-readable media. The instructions providing the interactive computing environment can configure one or more processing devices to perform operations described herein. In some aspects, the executable instructions for the interactive computing environment can include instructions that provide one or more graphical interfaces. The graphical interfaces are used by the user computing systems 106A-C to access various functions of the interactive computing environment. For instance, the interactive computing environment may transmit data to and receive data from a user computing system 106A to shift between different states of the interactive computing environment, where the different states allow one or more electronics transactions between the user computing system 106A and the client computing system 104 to be performed.

In some examples, a client computing system 104 may have other computing resources associated therewith (not shown in FIG. 1), such as server computers hosting and managing virtual machine instances for providing cloud computing services, server computers hosting and managing online storage resources for users, server computers for providing database services, and others. The interaction between the user computing systems 106A-C and the client computing system 104 may be performed through graphical user interfaces presented by the client computing system 104 to the user computing systems 106A-C, or through application programming interface (API) calls or web service calls.

The user computing systems 106A-C can include any computing device or other communication device operated by a user, such as a consumer or a customer. The user computing systems 106A-C can include one or more computing devices, such as laptops, smartphones, and other personal computing devices. Each of the user computing systems 106A-C can include executable instructions stored in one or more non-transitory computer-readable media. The user computing systems 106A-C can also include one or more processing devices that are capable of executing program code to perform operations described herein. In various examples, the user computing systems 106A-C can allow a user to access certain online services from a client computing system 104 or other computing resources, to engage in mobile commerce with a client computing system 104, to obtain controlled access to electronic content hosted by the client computing system 104, etc.

For instance, the user can use the user computing system 106A to engage in an electronic transaction with a client computing system 104 via an interactive computing environment. An electronic transaction between the user computing system 106A and the client computing system 104 can include, for example, the user computing system 106A being used to request online storage resources managed by the client computing system 104, acquire cloud computing resources (e.g., virtual machine instances), and so on. An electronic transaction between the user computing system 106A and the client computing system 104 can also include, for example, query a set of sensitive or other controlled data, access online financial services provided via the interactive computing environment, submit an online credit card application or other digital application to the client computing system 104 via the interactive computing environment, operating an electronic tool within an interactive computing environment hosted by the client computing system (e.g., a content-modification feature, an application-processing feature, etc.).

In some aspects, an interactive computing environment implemented through a client computing system 104 can be used to provide access to various online functions. As a simplified example, a website or other interactive computing environment provided by an online resource provider can include electronic functions for requesting computing resources, online storage resources, network resources, database resources, or other types of resources. In another example, a website or other interactive computing environment provided by a financial institution can include electronic functions for obtaining one or more financial services, such as loan application and management tools, credit card application and transaction management workflows, electronic fund transfers, etc. User computing systems 106A-C can be used to request access to the interactive computing environment provided by the client computing system 104, which can selectively grant or deny access to various electronic functions. Based on the request, the client computing system 104 can collect data associated with the user and communicate with the risk assessment server 118 for risk assessment. Based on the risk indicator predicted by the risk assessment server 118, the client computing system 104 can determine whether to grant the access request of the user computing systems 106A-C to certain features of the interactive computing environment.

In a simplified example, the system depicted in FIG. 1 can configure a unified risk prediction model to be used both for accurately determining risk indicators, such as credit scores, using predictor variables and determining explanatory data for the predictor variables. A predictor variable can be any variable predictive of risk that is associated with an entity. Any suitable predictor variable that is authorized for use by an appropriate legal or regulatory framework may be used.

Examples of predictor variables used for predicting the risk associated with an entity accessing online resources include, but are not limited to, variables indicating the demographic characteristics of the entity (e.g., the revenue of the company), variables indicative of prior actions or transactions involving the entity (e.g., past requests of online resources submitted by the entity, the amount of online resource currently held by the entity, and so on.), variables indicative of one or more behavioral traits of an entity (e.g., the timeliness of the entity releasing the online resources), etc. Similarly, examples of predictor variables used for predicting the risk associated with an entity accessing services provided by a financial institute include, but are not limited to, indicative of one or more demographic characteristics of an entity (e.g., income, etc.), variables indicative of prior actions or transactions involving the entity (e.g., information that can be obtained from credit files or records, financial records, consumer records, or other data about the activities or characteristics of the entity), variables indicative of one or more behavioral traits of an entity, etc.

The predicted risk indicator can be utilized by the service provider to determine the risk associated with the entity accessing a service provided by the service provider, thereby granting or denying access by the entity to an interactive computing environment implementing the service. For example, if the service provider determines that the predicted risk indicator is lower than a threshold risk indicator value, then the client computing system 104 associated with the service provider can generate or otherwise provide access permission to the user computing system 106A that requested the access. The access permission can include, for example, cryptographic keys used to generate valid access credentials or decryption keys used to decrypt access credentials. The client computing system 104 associated with the service provider can also allocate resources to the user and provide a dedicated web address for the allocated resources to the user computing system 106A, for example, by adding it in the access permission. With the obtained access credentials and/or the dedicated web address, the user computing system 106A can establish a secure network connection to the computing environment hosted by the client computing system 104 and access the resources via invoking API calls, web service calls, HTTP requests, or other proper mechanisms.

Each communication within the operating environment 100 may occur over one or more data networks, such as a public data network 108, a network 116 such as a private data network, or some combination thereof. A data network may include one or more of a variety of different types of networks, including a wireless network, a wired network, or a combination of a wired and wireless network. Examples of suitable networks include the Internet, a personal area network, a local area network ("LAN"), a wide area network ("WAN"), or a wireless local area network ("WLAN"). A wireless network may include a wireless interface or a combination of wireless interfaces. A wired network may include a wired interface. The wired or wireless networks may be implemented using routers, access points, bridges, gateways, or the like, to connect devices in the data network.

The number of devices depicted in FIG. 1 is provided for illustrative purposes. Different numbers of devices may be used. For example, while certain devices or systems are shown as single devices in FIG. 1, multiple devices may instead be used to implement these devices or systems. Similarly, devices or systems that are shown as separate, such as the network training server 110 and the risk assessment server 118, may be instead implemented in a signal device or system.

*Examples of Operations Involving Machine-Learning*

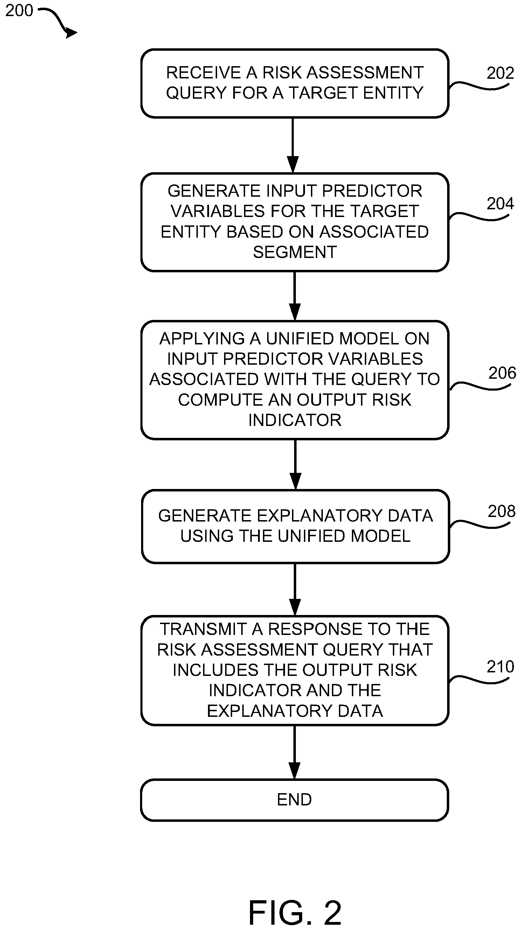

FIG. 2 is a flow chart depicting an example of a process 200 for generating and utilizing a unified machine learning model for segment-based risk assessment to generate risk indicators for a target entity based on predictor variables associated with the target entity. One or more computing devices (e.g., the risk assessment server 118) implement operations depicted in FIG. 2 by executing suitable program code (e.g., the risk assessment application 114). For illustrative purposes, the process 200 is described with reference to certain examples depicted in the figures. Other implementations, however, are possible.

At block 202, the process 200 involves receiving a risk assessment query for a target entity. The risk assessment query can be received from a remote computing device, such as a computing device associated with the target entity requesting the risk assessment. The risk assessment query can also be received by the risk assessment server 118 from a remote computing device associated with an entity authorized to request risk assessment of the target entity.

At operation 204, the process 200 involves generating input predictor variables for the target entity based on an associated segment. Examples of predictor variables can include data associated with an entity that describes prior actions or transactions involving the entity (e.g., information that can be obtained from credit files or records, financial records, consumer records, or other data about the activities or characteristics of the entity), behavioral traits of the entity, demographic traits of the entity, or any other traits that may be used to predict risks associated with the entity. In some aspects, predictor variables can be obtained from credit files, financial records, consumer records, etc. The risk indicator can indicate a level of risk associated with the entity, such as a credit score of the entity. The predictor variables for the segment can be a subset of the predictor variables 124.

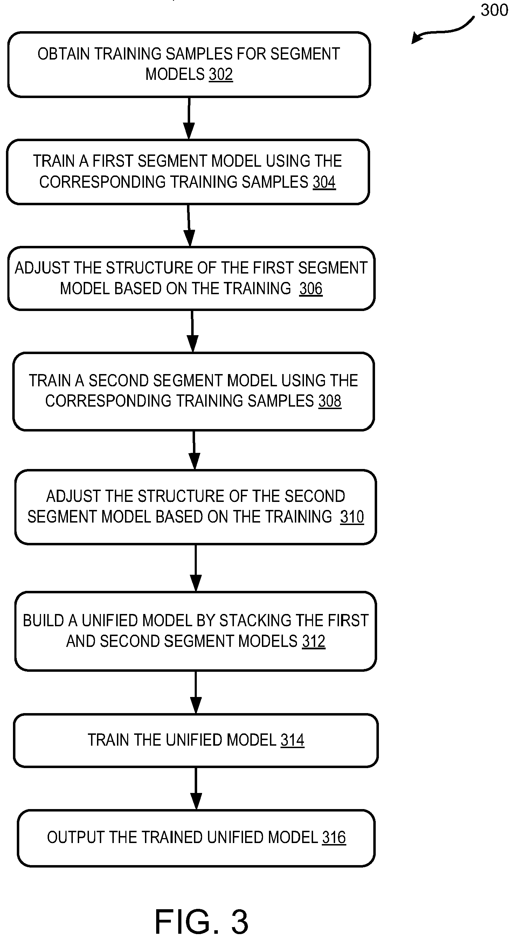

The unified risk prediction model can be constructed and trained based on training samples including training predictor variables and training risk indicator outputs. Constraints can be imposed on the training of the unified risk prediction model so that the unified risk prediction model maintains a monotonic relationship between the input predictor variables and the risk indicator outputs. Additional details regarding training the unified risk prediction model will be presented below with regard to FIG. 3.

At operation 206, the process 200 involves applying unified risk prediction model to generate a risk indicator for the target entity specified in the risk assessment query. The predictor variables associated with the target entity can be used as inputs to the unified risk prediction model. Some predictor variables may be shared across segments, while others are unique to specific segments. The predictor variables associated with the target entity can be obtained from a predictor variable database configured to store predictor variables associated with various entities. The output of the unified risk prediction model can include the risk indicator for the target entity based on the predictor variables.

At operation 208, the process 200 involves generating explanatory data using the unified risk prediction model. The explanatory data can indicate relationships between the risk indicator and the predictor variables. The explanatory data may indicate an impact a predictor variable has or a group of predictor variables have on the value of the risk indicator, such as credit score (e.g., the relative impact of the predictor variable(s) on a risk indicator).

At operation 210, the process 200 involves transmitting a response to the risk assessment query. The response can include the risk indicator generated using the unified risk prediction model. The response can also include the explanatory data. The risk indicator can be used for one or more operations that involve performing an operation with respect to the target entity based on a predicted risk associated with the target entity. In one example, the risk indicator can be utilized to control access to one or more interactive computing environments by the target entity. As discussed above with regard to FIG. 1, the risk assessment computing system 130 can communicate with client computing systems 104, which may send risk assessment queries to the risk assessment server 118 to request risk assessment. The client computing systems 104 may be associated with technological providers, such as cloud computing providers, online storage providers, or financial institutions such as banks, credit unions, credit-card companies, insurance companies, or other types of organizations. The client computing systems 104 may be implemented to provide interactive computing environments for customers to access various services offered by these service providers. Customers can utilize user computing systems 106A-C to access the interactive computing environments thereby accessing the services provided by these providers.

For example, a customer can submit a request to access the interactive computing environment using one of the user computing systems 106A-C. Based on the request, the client computing system 104 can generate and submit a risk assessment query for the customer to the risk assessment server 118. The risk assessment query can include, for example, an identity of the customer and other information associated with the customer that can be utilized to generate predictor variables. The risk assessment server 118 can perform a risk assessment based on predictor variables generated for the customer and return the predicted risk indicator to the client computing system 104.

Based on the received risk indicator, the client computing system 104 can determine whether to grant the customer access to the interactive computing environment. If the client computing system 104 determines that the level of risk associated with the customer accessing the interactive computing environment and the associated technical or financial service is too high, the client computing system 104 can deny access by the customer to the interactive computing environment. Conversely, if the client computing system 104 determines that the level of risk associated with the customer is acceptable, the client computing system 104 can grant access to the interactive computing environment by the customer and the customer would be able to utilize the various services provided by the service providers. For example, with the granted access, the customer can utilize the user computing systems 106A-C to access clouding computing resources, online storage resources, web pages or other user interfaces provided by the client computing system 104 to execute applications, store data, query data, submit an online digital application, operate electronic tools, or perform various other operations within the interactive computing environment hosted by the client computing system 104.

In other examples, the unified risk prediction model can also be utilized to generate adverse action codes or other explanation codes for the predictor variables. Adverse action code can indicate an effect or an amount of impact that a predictor variable has or a group of predictor variables have on the value of the risk indicator, such as credit score (e.g., the relative negative impact of the predictor variable(s) on a risk indicator such as the credit score). In some aspects, the risk assessment application uses the neural network to provide adverse action codes that are compliant with regulations, business policies, or other criteria used to generate risk evaluations. Examples of regulations to which the neural network conforms and other legal requirements include the Equal Credit Opportunity Act ("ECOA"), Regulation B, and reporting requirements associated with ECOA, the Fair Credit Reporting Act ("FCRA"), the Dodd-Frank Act, and the Office of the Comptroller of the Currency ("OCC").

In some implementations, the explanation codes can be generated for a subset of the predictor variables that have the highest impact on the risk indicator. For example, the risk assessment application 114 can determine the rank of each predictor variable based on the impact of the predictor variable on the risk indicator. A subset of the predictor variables including a certain number of highest-ranked predictor variables can be selected and explanation codes can be generated for the selected predictor variables. The risk assessment application 114 may provide recommendations to a target entity based on the generated explanation codes. The recommendations may indicate one or more actions that the target entity can take to improve the risk indicator (e.g., improve a credit score).

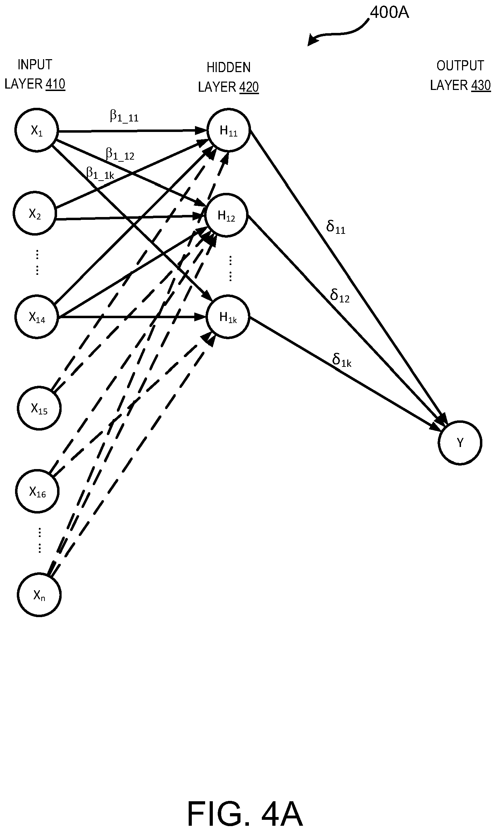

FIG. 3 is a flow chart depicting an example of a process 300 for training a unified machine learning model for segment-based risk assessment and outcome prediction. FIG. 3 will be presented in conjunction with FIGS. 4A-4C, where a diagram depicting an example of a first segment model, a second segment model and a unified neural network are presented, respectively. One or more computing devices (e.g., the network training server 110) implement operations depicted in FIG. 3 by executing suitable program code (e.g., the network training application 112). For illustrative purposes, the process 300 is described with reference to certain examples depicted in the figures. Other implementations, however, are possible.

At block 302, the process 300 involves the network training server 110 obtaining training samples for segment models. Each of the training samples can have values for multiple predictor variables and a corresponding training output. In some examples, each training record corresponds to an entity, such as an individual, an organization, a computing system, a computing device, or any other type of entities. The predictor variables for the training record can include the features or characteristics that can be utilized to predict the risk or other aspects associated with the entity when the entity performs certain operations such as accessing an interactive computing environment.

At block 304, the process 300 involves training a first segment model using corresponding training samples. The first segment model can correspond to a first entity segment. The first segment model can be trained using the training samples associated with the first entity segment. Referring to FIG. 4A where an example of the first segment model 400A is shown, the first segment model 400A includes an input layer 410, a hidden layer 420, and an output layer 430. Each layer can include one or more nodes connected to the nodes in another layer. The input layer 410 can include nodes $x_1$ through $x_n$ and the hidden layer can include nodes $h_{11}$ through $h_{1k}$. Each of the input nodes in the input layer can accept a predictor variable as an input and feed it to the hidden layer 420 through connections having weights $\beta_{ij}$ between these two layers. The node in the output layer 430 can receive processed data from the hidden layer 420 and output the prediction for the segment associated with the first segment model 400A. Each hidden node has a connection with weight $\delta_{jk}$ to the output Y.

The training of the first segment model 400A can include adjusting the parameters of the first segment model, such as the weights $\beta_{1\_ij}$ and $\delta_{1j}$ of the connections in the first segment model so that a loss function of the first segment model is minimized. For example, the network training server 110 can determine that the weights of the connections between nodes $x_1$ through $x_{14}$ of the input layer 410 to nodes $h_{11}$ through $h_{1k}$ in the hidden layer 420 are non-zero or greater than a threshold value of weight, shown as solid lines in FIG. 4A, and the weights of the connections between nodes $x_{15}$ through $x_n$ of the input layer 410 to nodes $h_{11}$ through $h_{1k}$ in the hidden layer 420 are zero or below the threshold value, shown as dotted lines in FIG. 4A.

At block 306, the process 300 involves adjusting the structure of the first segment model 400A based on the training. Adjusting the structure can involve removing input nodes and connections if the weights of the connections are determined to be zero or smaller than the threshold value. For example, upon determining that the weights of the connections between nodes $x_{15}$ through $x_n$ of the input layer 410 to nodes $h_{11}$ through $h_{1k}$ in the hidden layer 420 are zero or smaller than the threshold value, the network training server 110 can remove the connections between nodes $x_{15}$ through $x_n$ and nodes $h_{11}$ through $h_{1k}$ for the first segment model 400A by removing the dotted lines illustrated in FIG. 4A.

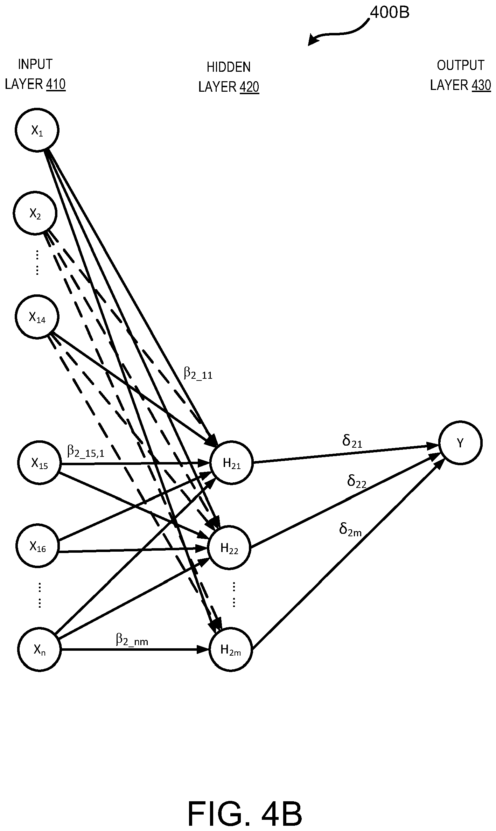

At block 308, the process 300 involves training a second segment model using corresponding training samples. The second segment model can correspond to a second entity segment. The second segment model can be trained using the training samples associated with the second entity segment. Referring to FIG. 4B where an example of the second segment model 400B is shown, the second segment model 400B includes the input layer 410, the hidden layer 420, and the output layer 430. Similar to the segment model 400A, each layer can include one or more nodes connected to the nodes in another layer. The input layer 410 can include nodes $x_1$ through $x_n$ and the hidden layer can include nodes $h_{21}$ through $h_{2m}$. Each of the input nodes in the input layer 410 can accept a predictor variable as an input and feed it to the hidden layer 420. The node in the output layer 430 can receive processed data from the hidden layer 420 and output the prediction for the segment associated with the second segment model 400B. Similar to the training of the first segment model 400A described above, the training of the second segment model 400B can include adjusting the parameters of the second segment model 400B, such as the weights $\beta_{2\_ij}$ and $\delta_{2j}$ of the connections in the second segment model so that a loss function of the second segment model is minimized. For example, the network training server 110 can determine that the weights of the connections between nodes $x_1$, $x_{14}$, and $x_{15}$ through $x_n$ of the input layer 410 to nodes $h_{21}$ through $h_{2m}$ in the hidden layer 420 are non-zero or greater than the threshold value, shown as solid lines in FIG. 4B, and the weights of the connections between nodes $x_2$ through $x_{13}$ of the input layer 410 to nodes $h_{21}$ through $h_{2m}$ in the hidden layer 420 are zero or smaller than the threshold value shown as dotted lines in FIG. 4B.

At block 310, the process 300 involves adjusting the structure of the second segment model 400B based on the training. Adjusting the structure can involve removing input nodes and connections if the weights of the connections are determined to be zero or smaller than the threshold value. For example, upon determining that the weights of the connections between nodes $x_2$ through $x_{13}$ of the input layer 410 to nodes $h_{21}$ through $h_{2m}$ in the hidden layer 420 are zero or below the threshold value, the network training server 110 can remove the connections between nodes $x_2$ through $x_{13}$ and nodes $h_{21}$ through $h_{2m}$ for the second segment model 400B by removing the dotted lines illustrated in FIG. 4B.

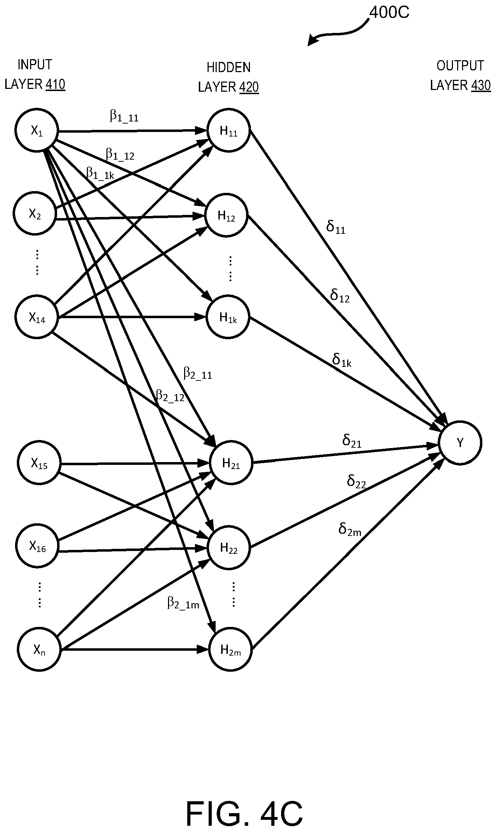

At block 312, the process 300 involves building a unified model by stacking the first and second segment models. In the example of unified model 400C shown in FIG. 4C, the input layer 410 of the unified neural network 400C can include nodes merged from the nodes in the input layers of the first and second segment models 400A and 400B. The hidden layer 420 of the unified neural network 400C can be constructed by including nodes in the corresponding hidden layer of the first and second segment models 400A and 400B. The output layer 430 can be constructed by merging node y in the output layers of the first and second segment models 400A and 400B.

At block 314, the process 300 involves training the unified model. The training can be performed to further adjust the weights of the connections among the nodes. The training of the unified machine learning model can be performed using the collection of the training samples of the first and second segment models. Training the unified machine learning model can include adjusting the parameters of the unified machine learning model, such as the weights of the connections in the unified machine learning model so that a loss function of the unified machine learning model is minimized. The unified machine learning model can be initialized for training by setting weights of connections among the input layer, the hidden layers, and the output layer of the unified model to be the weights of corresponding connections in the respective segment models.

At block 316, the process 300 involves outputting the trained unified model. The trained unified model can then be used for determining a risk indicator for input predictor variables associated with a target entity. When using the trained unified model to make a prediction, the predictor variables for a target entity are generated based on the segment that the target entity belongs to. In other words, the input predictor variables for the corresponding segment model are generated, and the remaining input predictor variables of the unified model can be set to zero. In this way, only the corresponding segment model is used to make the prediction.

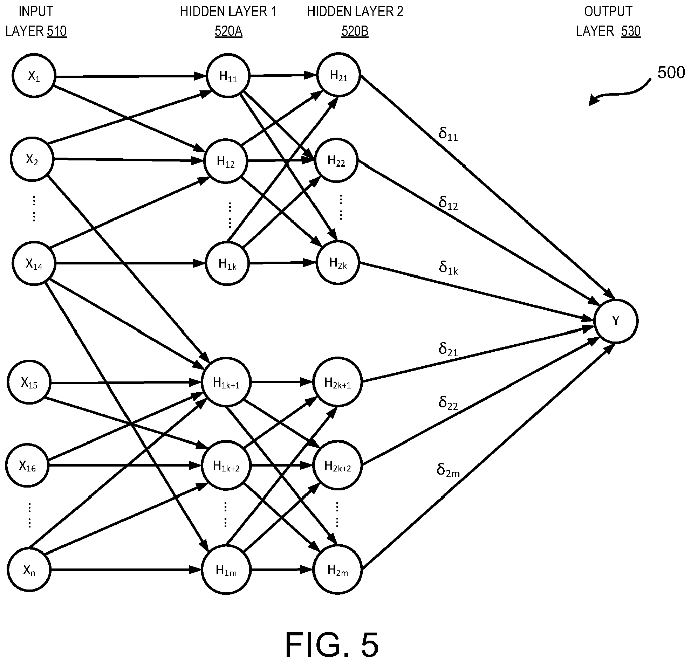

While FIGS. 4A-4C show segment models and a unified model with a single hidden layer, each of these models can have multiple hidden layers. FIG. 5 is a diagram depicting an example of the architecture of a unified neural network model 500 that has two hidden layers. Similar to the unified neural network 400C in FIG. 4C, the unified neural network model 500 includes an input layer 510 and an output layer 530. The unified neural network model 500 also includes hidden layers 520A-B. First and second segment models can be trained separately to determine weights of the connections between the nodes of the input layer 510, the hidden layers 520A-B, and the output layer 530. The determined weights can be used to adjust the structure of the individual segment models as discussed above. The adjusted segment models can be stacked together to generate the unified neural network model 500. The node in the output layer 530 can receive processed data from the hidden layer 520B and output a risk prediction.

Although the hidden layer 520A is shown as being fully connected to the hidden layer 520B for each segment, in other examples the hidden layer 520A may be partially connected to the hidden layer 520B for each segment. Although FIGS. 4A-5 show unified models generated by stacking two segment models, more than two segment models can be built and stacked to generate the unified model.

*Examples of Building Explainable Models*

As discussed above, training a neural network model (a segment model or the unified model) can include solving the optimization problem to find the parameters of the neural network, such as the weights of the connections in the neural network so that a loss function of the neural network is minimized. The loss function can be defined as, or as a function of, the difference between the outputs predicted using the neural network with its current weights and the observed output in the training samples.

To ensure the monotonic relationship between each predictor variable and the output of the neural network, the network training server 110 can be configured to implement additional mechanisms in the training process. In one example, the network training server 110 can conduct an exploratory data analysis (EDA) on bivariate relationships between the predictor variable instances and the observed risk indicators. During the training of the neural network, the network training server 110 can evaluate the relationship between the predictor variable instances and the output generated by the neural network to determine whether the modeled risk indicator exhibits a monotonic relationship with each predictor variable instance for every entity in the sample. For those predictors that have a monotonic relationship with the output risk indicator, the network training server 110 can identify those whose trend is in accordance with the observed trend from the EDA. These predictor variable instances can be determined to be valid for the neural network. If any predictor variable instances are not valid, the neural network can be adjusted, such as by changing the input predictor variable instances or the number of nodes in the hidden layer. This process is repeated until the effect of every predictor variable instance retained in the neural network agrees in sign with the EDA conducted on bivariate relationships between the predictor variable instances and the observed risk indicator. A detailed description of this approach can be found in U.S. Patent No. 10,133,980 issued on November 20, 2018, entitled "Optimizing neural networks for risk assessment," the disclosure of which is hereby incorporated by reference in its entirety. In further examples, the network training server 110 identifies the predictor variables that have consistent trend relationship (increasing or decreasing) with the output risk indicators across the multiple segment models as valid predictor variables for use in the segment models and the unified model.

In another example, a constraint can be added to the optimization problem of minimizing the loss function of the neural network described above to enforce the monotonicity of the neural network. The monotonicity can be enforced by enforcing the partial derivative of the output over each input variable instance to be non-negative. In some cases, the impact of an input predictor variable instance on the output of the neural network can be determined, at least in part, by the weights along the paths from the input node corresponding to a variable instance to the output node. These weights include the weight from the input node to the node in the first hidden layer (the weight in the attribute network), the weight from a node in each hidden layer node to a node in the next hidden layer, and the weight from the node in the last hidden layer to the output layer node.

The constraint of the monotonicity between a predictor variable instance and the output can be imposed on these weights so that the product of weights along any path from the input variable instance to the output is greater than or equal to 0. This can be mathematically denoted as $\prod_{l=1}^{L} w_{ij}^{(l)} \geq 0$, where $w_{ij}^{(l)}$ is the weight from node i in the ($l$ - 1)-th layer to node j in the $l$-th layer of the neural network. In this way, the impact of the input predictor variable instance on the output can be made to be always non-negative. Note the monotonic constraint can also be enforcing the product of weights along any path from the input variable instance to the output is smaller than or equal to 0. Details on solving this constrained optimization problem can be found, for example, in U.S. Patent No. 10,558,913 issued on February 11, 2020, entitled "Machine-learning techniques for monotonic neural networks," the disclosure of which is hereby incorporated by reference in its entirety.

By enforcing the training of the neural network to satisfy the specific rules set forth in the monotonic constraint, a special neural network structure can be established that inherently carries the monotonic property. There is thus no need to perform additional adjustment of the neural network for monotonicity purposes described in the first example. As a result, the training of the neural network can be completed with fewer operations and thus requires fewer computational resources.

*Examples of Computing Explanatory Data with Neural Network*

To generate explanatory data, the impact of individual predictor variable instances on the risk indicator can be computed. For example, a "points below max" approach can be used to determine the impact. This approach can be formulated as:

$$
f(X_{t_k}^{(1)}, \ldots, X_{t_{k-(N-1)}}^{(1)}, \ldots, X_{t_k}^{(m)}, \ldots X_{t_{k-n}}^{*(m)}, \cdots, X_{t_{k-(N-1)}}^{(m)}, \ldots, X_{t_k}^{(M)}, \ldots, X_{t_{k-(N-1)}}^{(M)}) -
$$

$$
f(X_{t_k}^{(1)}, \ldots, X_{t_{k-(N-1)}}^{(1)}, \ldots, X_{t_k}^{(m)}, \ldots X_{t_{k-n}}^{(m)}, \cdots, X_{t_{k-(N-1)}}^{(m)}, \ldots, X_{t_k}^{(M)}, \ldots, X_{t_{k-(N-1)}}^{(M)}). \tag{1}
$$

Here, f(·) denotes the function or model for determining the risk indicator using the predictor variable instances as inputs. $X_{t_k-n}^{*(m)}$ denotes the value of the variable instance $X_{t_k-n}^{*(m)}$ that maximizes the risk indicator f(·) when the values of other variable instances are fixed. Since f(·) is monotonic in each variable instance, $X_{t_k-n}^{*(m)}$ will be the right or left endpoint of the domain of $X_{t_k-n}^{*(m)}$, depending on whether it is a positive or negative behavior instance.

To generate the explanatory data, for each predictor variable instance, the points below max may be computed by applying Equation (1). The resulting points are sorted in descending order and one or more common reason codes can be generated for predictor variable instances having one of the highest points. Other similar explanation methods may be applied to rank the significance of each predictor variable instance on the neural network model and to generate the explanatory data.

It is noted that the risk indicator described herein is merely an example of the output of the segment models and the unified model and should not be construed as limiting. The segment models and the unified model may be configured and trained to generate various other types of outputs using proper training samples. For example, the outputs can be the prediction of entity behavior or other response variables. The output can have a value from a set of discrete values or a set of continuous values. In addition, the architectures of the unified neural network shown in FIGS. 4C and 5 are for illustration purposes, and the unified model may be configured with other architectures. For example, a unified model can include more than two segment models, any number of hidden nodes, or both.

*Example of Computing System for Machine-Learning Operations*

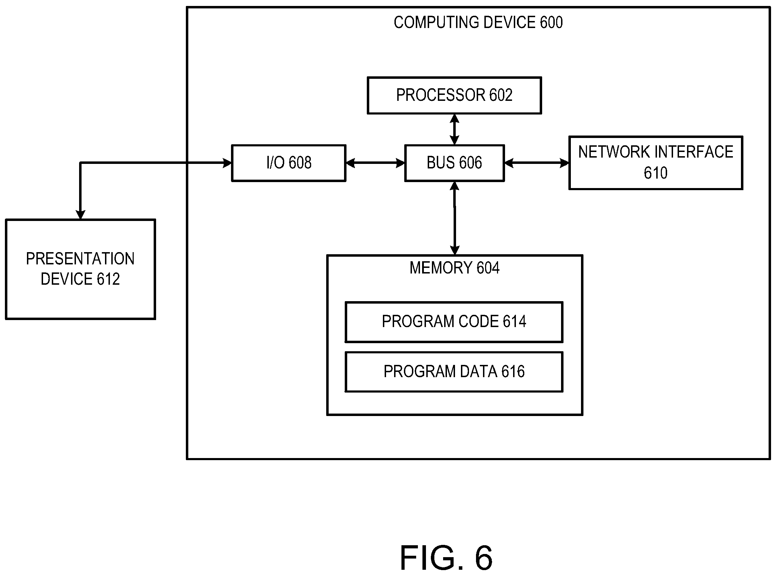

Any suitable computing system or group of computing systems can be used to perform the operations for the machine-learning operations described herein. For example, FIG. 6 is a block diagram depicting an example of a computing device 600, which can be used to implement the risk assessment server 118 or the network training server 110. The computing device 600 can include various devices for communicating with other devices in the operating environment 100, as described with respect to FIG. 1. The computing device 600 can include various devices for performing one or more transformation operations described above with respect to FIGS. 1-5.

The computing device 600 can include a processor 602 that is communicatively coupled to a memory 604. The processor 602 executes computer-executable program code stored in the memory 604, accesses information stored in the memory 604, or both. Program code may include machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing or receiving information, data, arguments, parameters, or memory contents. Information, arguments, parameters, data, etc. may be passed, forwarded, or transmitted via any suitable means including memory sharing, message passing, token passing, network transmission, among others.

Examples of a processor 602 include a microprocessor, an application-specific integrated circuit, a field-programmable gate array, or any other suitable processing device. The processor 602 can include any number of processing devices, including one. The processor 602 can include or communicate with a memory 604. The memory 604 stores program code that, when executed by the processor 602, causes the processor to perform the operations described in this disclosure.

The memory 604 can include any suitable non-transitory computer-readable medium. The computer-readable medium can include any electronic, optical, magnetic, or other storage device capable of providing a processor with computer-readable program code or other program code. Non-limiting examples of a computer-readable medium include a magnetic disk, memory chip, optical storage, flash memory, storage class memory, ROM, RAM, an ASIC, magnetic storage, or any other medium from which a computer processor can read and execute program code. The program code may include processor-specific program code generated by a compiler or an interpreter from code written in any suitable computer-programming language. Examples of suitable programming language include Hadoop, C, C++, C#, Visual Basic, Java, Python, Perl, JavaScript, ActionScript, etc.

The computing device 600 may also include a number of external or internal devices such as input or output devices. For example, the computing device 600 is shown with an input/output interface 608 that can receive input from input devices or provide output to output devices. A bus 606 can also be included in the computing device 600. The bus 606 can communicatively couple one or more components of the computing device 600.

The computing device 600 can execute program code 614 that includes the risk assessment application 114 and/or the network training application 112. The program code 614 for the risk assessment application 114 and/or the network training application 112 may be resident in any suitable computer-readable medium and may be executed on any suitable processing device. For example, as depicted in FIG. 6, the program code 614 for the risk assessment application 114 and/or the network training application 112 can reside in the memory 604 at the computing device 600 along with the program data 616 associated with the program code 614, such as the predictor variables 124 and/or the segment training samples 126. Executing the risk assessment application 114 or the network training application 112 can configure the processor 602 to perform the operations described herein.

In some aspects, the computing device 600 can include one or more output devices. One example of an output device is the network interface device 610 depicted in FIG. 6. A network interface device 610 can include any device or group of devices suitable for establishing a wired or wireless data connection to one or more data networks described herein. Non-limiting examples of the network interface device 610 include an Ethernet network adapter, a modem, etc.

Another example of an output device is the presentation device 612 depicted in FIG. 6. A presentation device 612 can include any device or group of devices suitable for providing visual, auditory, or other suitable sensory output. Non-limiting examples of the presentation device 612 include a touchscreen, a monitor, a speaker, a separate mobile computing device, etc. In some aspects, the presentation device 612 can include a remote client-computing device that communicates with the computing device 600 using one or more data networks described herein. In other aspects, the presentation device 612 can be omitted.

The foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure.

**Claims**

1. A method performed by one or more processing devices, comprising:

   determining, using a unified risk prediction model built from a plurality of segment models, a risk indicator for a target entity from predictor variables associated with the target entity, wherein the target entity belongs to one of a plurality of entity segments each associated with a segment model of the plurality of segment models, wherein the unified risk prediction model is configured to be generated by performing operations comprising:

   accessing training samples for the plurality of entity segments, each training sample comprising values for training predictor variables and a corresponding training output;
   training the plurality of segment models using respective training samples for the plurality of entity segments;
   constructing the unified risk prediction model by stacking the trained plurality of segment models; and
   training the unified risk prediction model using the training samples for the plurality of entity segments; and

   transmitting, to a remote computing device, a responsive message including at least the risk indicator for use in controlling access of the target entity to one or more interactive computing environments.

2. The method of claim 1, further comprising generating, for the target entity, explanatory data indicating relationships between changes in the risk indicator and changes in the predictor variables associated with the target entity and including the explanatory data in the responsive message.

3. The method of claim 1, wherein:

   each of the plurality of segment models comprises a neural network model comprising at least an input layer, one or more hidden layers, and an output layer; and
   training a segment model comprises performing adjustments of weights of connections among the input layer, the one or more hidden layers, and the output layer of the neural network model to minimize a loss function calculated based on the training samples for the entity segment associated with the segment model.

4. The method of claim 3, wherein constructing the unified risk prediction model by stacking the trained plurality of segment models comprises:

   constructing an input layer by merging nodes in the input layers of the plurality of segment models;
   constructing one or more hidden layers of the unified risk prediction model by including nodes in corresponding hidden layers of the plurality of segment models;
   constructing an output layer by merging nodes in the output layers of the plurality of segment models; and
   initializing the unified risk prediction model by building connections among the input layer, the hidden layers, and the output layer of the unified risk prediction model based on the weights of corresponding connections in the respective segment models.

5. The method of claim 4, wherein training the unified risk prediction model using the training samples for the plurality of entity segments comprises performing adjustments of weights of connections among the input layer, the one or more hidden layers, and the output layer of the unified risk prediction model to minimize a loss function calculated based on the training samples for the plurality of entity segments.

6. The method of claim 4, wherein building connections among the input layer, the hidden layers, and the output layer of the unified risk prediction model based on the weights of corresponding connections in the respective segment models comprises removing a connection based on the weight of the connection is zero.

7. The method of claim 1, further comprising generating the predictor variables associated with the target entity according to the entity segment that the target entity belongs to.

8. The method of claim 1, wherein the plurality of entity segments are disjoint.

9. A system comprising:
   a processing device; and
   a memory device in which instructions executable by the processing device are stored for causing the processing device to perform the method of any preceding claim.

10. A non-transitory computer-readable storage medium having program code that is executable by a processor device to cause a computing device to perform operations, the operations comprising the method of any of claims 1-8.

FIG. 1

RISK ASSESSMENT COMPUTING SYSTEM 130

RISK ASSESSMENT SERVER 118

RISK ASSESSMENT APPLICATION 114

UNIFIED RISK PREDICTION MODEL 120

NETWORK TRAINING SERVER 110

NETWORK TRAINING APPLICATION 112

UNIFIED RISK PREDICTION MODEL 120

CLIENT COMPUTING SYSTEMS 104

PUBLIC DATA NETWORK 108

USER COMPUTING SYSTEMS 106A

USER COMPUTING SYSTEMS 106B

USER COMPUTING SYSTEMS 106C

NETWORK 116

RISK DATA REPOSITORY 122

PREDICTOR VARIABLES 124

SEGMENT TRAINING SAMPLES 126

100

200

```
              ┌──────────────────────────┐
              │  RECEIVE A RISK ASSESSMENT │ ── 202
              │  QUERY FOR A TARGET ENTITY │
              └──────────────────────────┘
                          │
                          ▼
              ┌──────────────────────────┐
              │  GENERATE INPUT PREDICTOR  │ ── 204
              │  VARIABLES FOR THE TARGET  │
              │  ENTITY BASED ON ASSOCIATED│
              │         SEGMENT            │
              └──────────────────────────┘
                          │
                          ▼
              ┌──────────────────────────┐
              │  APPLYING A UNIFIED MODEL ON│ ── 206
              │  INPUT PREDICTOR VARIABLES │
              │  ASSOCIATED WITH THE QUERY TO│
              │  COMPUTE AN OUTPUT RISK    │
              │        INDICATOR           │
              └──────────────────────────┘
                          │
                          ▼
              ┌──────────────────────────┐
              │  GENERATE EXPLANATORY DATA │ ── 208
              │  USING THE UNIFIED MODEL   │
              └──────────────────────────┘
                          │
                          ▼
              ┌──────────────────────────┐
              │  TRANSMIT A RESPONSE TO THE│ ── 210
              │  RISK ASSESSMENT QUERY THAT│
              │  INCLUDES THE OUTPUT RISK  │
              │  INDICATOR AND THE         │
              │  EXPLANATORY DATA          │
              └──────────────────────────┘
                          │
                          ▼
              ┌──────────────────────────┐
              │           END              │
              └──────────────────────────┘
```

FIG. 2

300

OBTAIN TRAINING SAMPLES FOR SEGMENT MODELS 302

↓

TRAIN A FIRST SEGMENT MODEL USING THE CORRESPONDING TRAINING SAMPLES 304

↓

ADJUST THE STRUCTURE OF THE FIRST SEGMENT MODEL BASED ON THE TRAINING 306

↓

TRAIN A SECOND SEGMENT MODEL USING THE CORRESPONDING TRAINING SAMPLES 308

↓

ADJUST THE STRUCTURE OF THE SECOND SEGMENT MODEL BASED ON THE TRAINING 310

↓

BUILD A UNIFIED MODEL BY STACKING THE FIRST AND SECOND SEGMENT MODELS 312

↓

TRAIN THE UNIFIED MODEL 314

↓

OUTPUT THE TRAINED UNIFIED MODEL 316

FIG. 3

400A

INPUT
LAYER 410

HIDDEN
LAYER 420

OUTPUT
LAYER 430

$X_1$

$X_2$

$X_{14}$

$X_{15}$

$X_{16}$

$X_n$

$\beta_{1\_11}$

$\beta_{1\_12}$

$\beta_{1\_1k}$

$H_{11}$

$H_{12}$

$H_{1k}$

$\delta_{11}$

$\delta_{12}$

$\delta_{1k}$

Y

FIG. 4A

FIG. 4B

FIG. 4C

FIG. 5

EP 4 202 771 A1

COMPUTING DEVICE 600

PROCESSOR 602

I/O 608 ⟷ BUS 606 ⟷ NETWORK INTERFACE 610

PRESENTATION DEVICE 612

MEMORY 604

PROGRAM CODE 614

PROGRAM DATA 616

FIG. 6

**EP 4 202 771 A1**

Europäisches Patentamt
European Patent Office
Office européen des brevets

# EUROPEAN SEARCH REPORT

Application Number

EP 22 21 5083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI MEIXUAN ET AL: "The network loan risk prediction model based on Convolutional neural network and Stacking fusion model", APPLIED SOFT COMPUTING, vol. 113, 1 December 2021 (2021-12-01), page 107961, XP093038143, AMSTERDAM, NL ISSN: 1568-4946, DOI: 10.1016/j.asoc.2021.107961 * figure 1 and 2 * * sections 1-3 * ----- | 1-10 | INV. G06N3/045 G06N3/09 ADD. G06N3/082 G06Q40/00 G06F21/30 |

TECHNICAL FIELDS SEARCHED (IPC)

G06N

The present search report has been drawn up for all claims

| Place of search | Date of completion of the search | Examiner |
|---|---|---|
| The Hague | 11 April 2023 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................
& : member of the same patent family, corresponding document

EPO FORM 1503 03.82 (P04C01)

**EP 4 202 771 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10133980 B
- US 10558913 B